# EUROPÄISCHE PATENTANMELDUNG

(11) **EP 1 860 434 A1**
(43) Veröffentlichungstag der Anmeldung: **28.11.2007**
(21) Anmeldenummer: 07010223.1
(22) Anmeldetag: 23.05.2007
(51) Int. Cl.: G01N 30/08, G01N 30/46

(54) **Verfahren zur Analyse von Substanzgemischen**

(30) Priorität: 24.05.2006 DE 102006024836
(71) Anmelder: Shimadzu Europa GmbH, 47269 Duisburg (DE)
(72) Erfinder: Grobosch, Thomas, Dr., 14055 Berlin (DE); Schönberg, Lena, 10247 Berlin (DE); Erxleben, Björn-Thoralf, Dr., 12623 Berlin (DE)
(74) Vertreter: Baumbach, Friedrich

(57) **Zusammenfassung**

Die Erfindung betrifft Verfahren zur Bestimmung von Analyten in Substanzgemischen und Körperflüssigkeiten sowie eine Vorrichtung zur Durchführung des Verfahrens.

Anwendungsgebiete der Erfindung sind die akute Notfalldiagnostik, die klinische Toxikologie und forensische Anwendungen sowie Suchtstoffanalytik, beispielsweise die Detektion von Fremdstoffen in Körperflüssigkeiten wie Urin und Serum.

Das erfindungsgemäße Verfahren zur Analyse von Substanzgemischen (Proben), umfasst folgende Schritte:
a) Vorreinigung des Substanzgemischs,
b) Inkontaktbringen des Substanzgemischs mit mindestens einem Teil eines chromatographischen Trennsystems, das eine stationäre Phase und eine mobile Phase (Etuens) umfasst,
c) Hindurchleiten eines Eluensstroms durch die stationäre Phase des chromatographischen Trennsystems,
d) Analyse des aus dem chromatographischen Trennsystem austretenden Eluensstroms mithilfe eines Detektors zur Detektion von Analyten,
h) Aufzeichnung des Detektorsignals in Abhängigkeit von der Zeit zur Generierung eines Probenspektrums,
i) Ermittlung von Retentionszeiten von Peaks im Probenspektrum,
j) Identifizierung von Analyten innerhalb des Substanzgemischs durch den Vergleich des Probenspektrums mit Vergleichsspektren.

Es ist dadurch gekennzeichnet, dass Schritt (a) durch Extraktion mit einer kationischen Fest-, Flüssig- oder nichtionischen Festphase erreicht wird, es ist ferner dadurch gekennzeichnet, dass die stationäre Phase in Schritt (b) mindestens einen hydrophoben (S, U) und einen kationischen (U) Teil umfasst.

## Beschreibung

Die Erfindung betrifft Verfahren zur Bestimmung von Analyten in Substanzgemischen und Körperflüssigkeiten sowie eine Vorrichtung zur Durchführung des Verfahrens.

Anwendungsgebiete der Erfindung sind die akute Notfalldiagnostik, die klinische Toxikologie und forensische Anwendungen sowie Suchtstoffanalytik, beispielsweise die Detektion von Fremdstoffen in Körperflüssigkeiten wie Urin und Serum.

Körperflüssigkeiten sind hochkomplexe Substanzgemische. Die große Zahl der darin enthaltenen Stoffe deckt einen breiten Bereich von Molekülgrößen, Polaritäten und Ionisierungszuständen ab. Eine gleichzeitige Identifizierung aller enthaltenen Komponenten ist mit den vorhandenen technischen Mitteln nicht möglich. Dementsprechend ermöglichen die gegenwärtigen Verfahren lediglich die zuverlässige Analyse von einzelnen der enthaltenen Stoffe.

Bei der Analyse von Fremdstoffen in Körperflüssigkeiten wird üblicherweise ein großer Anteil der körpereigenen Substanzen in einem Vorreinigungsschritt abgetrennt. Dieser Vorreinigungsschritt stellt eine erhebliche Herausforderung an den Analytiker dar, denn die interessierenden Fremdstoffe sind häufig nur in sehr geringen Konzentrationen vorhanden. Es sind daher leistungsfähige Trennverfahren notwendig, um die Vorreinigung zu bewerkstelligen.

In der Praxis kommen zur Vorreinigung Flüssig- oder Festphasen-Extraktionsschritte zum Einsatz. Dazu wird die zu untersuchende Körperflüssigkeit mit einer entsprechenden Extraktionsphase in Kontakt gebracht, so dass die Analyte in die Extraktionsphase übergehen oder an diese binden können. Die Analyte werden nachfolgend aus der Extraktionsphase entfernt und der weiteren Untersuchung zugeführt.

Die Wahl eines Extraktionsverfahrens wird durch die Besonderheiten des jeweiligen Analyten (und/oder von der Art der Matrix) bestimmt. Nach der Extraktion ist in der Regel eine chromatographische Trennung erforderlich. In der Praxis sind bisher Systeme bekannt, bei denen zur Vorreinigung eine Extraktion mit einer hydrophoben und einer anionischen Festphase und, zur weiteren chromatographischen Auftrennung der extrahierten Analyte, hydrophobe Umkehr- und/oder Silica-Festphasen eingesetzt werden. Ein Beispiel dafür ist das nach diesem Prinzip arbeitende System *Remedi HS*^{™} *Drug profiling system* der Firma Biorad (beschrieben bei S.R. Binder, M. Regalia, M. Biaggi-McEachern, M. Mazhar, J. Chromatogr. 473 (1989) 325-341. für die Urinanalytik in der akuten Notfalldiagnostik und bei forensischen Fragestellungen.

US Patent 5 416 023 beschreibt das zweite Biorad System für die Bestimmung von Benzodiazepinen. Als Extraktionsmaterial dient eine anionische und eine hydrophobe/stark kationische Phase, als HPLC-Phase ein reversed-phase (Umkehrphase) Material.

Die Hauptnachteile der bisher bekannten Kombinationen von Extraktions- und Trennschritten mit Hilfe anionischer und hydrophober Festphasen sind der hohe Wartungsaufwand bedingt durch relativ kurze Säulenstandzeiten, ausschließlich firmenspezifische Reagenzien, veraltete Speichermedien und die systembedingte Einschränkung, dass der Trennvorgang vom Anwender nicht verändert werden kann. Darüber hinaus liefern die vorhandenen Systeme unbefriedigende Resultate beim Nachweis von sauren oder neutralen Substanzen.

Der Erfindung liegt daher die Aufgabe zugrunde effiziente Verfahren und Vorrichtungen zur einfachen Analyse von Substanzgemischen bereitzustellen, die durch eine hohe Zuverlässigkeit, Nachweisempfindlichkeit, die Verwendung laborüblicher Reagenzien und die Möglichkeit der zusätzlichen Methodenetablierung durch den Anwender gekennzeichnet sind.

Ein weiteres Ziel besteht darin, eine Vorrichtung zu entwickeln, mit der die Verfahren durchgeführt werden können, wobei insbesondere ein hoher Automatisierungsgrad angestrebt wird.

Diese Aufgabe wird durch die vorliegende Erfindung gemäß den Ansprüchen 1, 13 und 14 gelöst die Unteransprüche sind Vorzugsvarianten.

Kernpunkt der vorliegenden Erfindung ist die Vorreinigung von Körperflüssigkeiten unter Einsatz kationischer oder nichtionischer Festphasen oder Flüssigphasen zur Extraktion sowie das Inkontaktbringen des vorgereinigten Substanzgemischs mit mindestens einem Teil der stationären Phase eines chromatographischen Trennsystems, das eine stationäre Phase und eine mobile Phase (Eluens) umfasst, wobei die stationäre Phase mindestens einen polymerbasierten Teil umfasst. Nachfolgend werden die einzelnen Schritte des erfindungsgemäßen Verfahrens näher erläutert.
a) Erfindungsgemäß durchlaufen die Proben, bei denen es sich um Urinproben oder Serumproben handeln kann, zunächst einen Extraktionsschritt.
   Einem Festphasenextraktionsschritt im Sinne der vorliegenden Erfindung können beispielsweise Urinproben unterzogen werden. In ähnlicher Weise kann allerdings auch mit anderen Substanzproben verfahren werden. Die erfindungsgemäße On-line-Festphasenextraktion setzt sich aus den vier Teilschritten Konditionieren, Beladen, Spülen und Elution zusammen. Das Konditionieren dient der Aktivierung des Festphasenmaterials, so dass eine optimale Retention der Analyte im folgenden Beladungsschritt gewährleistet ist. Dazu wird das Festphasenmaterial mit geeigneten Konditionierungslösungen in Kontakt gebracht, die beispielsweise den Ionisierungszustand von funktionellen Gruppen des Festphasenmaterials beeinflussen. Im Beladungsschritt wird die Probelösung mit dem Festphasenmaterial in Kontakt gebracht. Dabei werden Lösungsbedingungen gewählt, die dazu geeignet sind eine Bindung von Analyten an das Festphasenmaterial zu erlauben. Im anschließenden Spülschritt wird das Festphasenmaterial mit einer Lösung gewaschen, die dazu geeignet ist diejenigen Probenbestandteile zu entfernen, die nicht analysiert werden sollen, aber gleichzeitig die Bindung der interessierenden Analyte an die Festphase ermöglicht. Auf das Spülen folgt der Elutionsschritt, der das Inkontaktbringen der Festphase mit einem Eluens umfasst, dass dazu geeignet ist, die an die Festphase gebundenen Analyte aufzunehmen und auf diese Weise von der Festphase zu entfernen.
   Im Sinne der Erfindung umfassen kationische Festphasen zum Zwecke der Vorreinigung durch Extraktion, schwache Kationenaustauscher-Materialien. Geeignete kationische Festphasen enthalten z.B. ionische funktionelle Gruppen mit pKa-Werten im Bereich von 2 - 7 Desweiteren können auch nichtionische Materialien eingesetzt werden.
   Im Falle von **Serumproben** wird erfindungsgemäß bevorzugt eine flüssig-flüssig Extraktion durchgeführt. Die erfindungsgemäße flüssig-flüssig Extraktion umfasst das Inkontaktbringen der Probenlösung mit einem flüssigen Extraktionsmittel. Das Extraktionsmittel ist dazu geeignet, die im weiteren Verlauf zu analysierenden Substanzen effizient zu lösen und gleichzeitig diejenigen Probenbestandteile weniger gut zu lösen, die nicht analysiert werden sollen. Das Extraktionsmittel bildet mit der Probenlösung ein System mit mindestens zwei flüssigen Phasen, so dass die Analyte in einer der Phasen angereichert werden. Im Rahmen der erfindungsgemäßen flüssigflüssig Extraktion wird die Probenlösung mit dem Extraktionsmittel in Kontakt gebracht und in der Regel anschließend gut durchmischt. Anschließend wird die Phase, in der sich die Analyte angereichert haben aufgehoben, während die andere Phase erneut extrahiert oder verworfen wird. Erfindungsgemäß wird in der Regel ein Extraktionszyklus durchgeführt, bevor die Analytphase der weiteren Untersuchung zugeführt wird.
   Im Sinne der Erfindung wird die flüssig-flüssig Extraktion durchgeführt, indem für die Probenlösung ein organisches, nicht mit Wasser mischbares Solvens und als Flüssigphase wässrige Pufferlösungen, mit einem pH-Wert im Bereich von 8 - 14 eingesetzt werden. Neben der flüssig-flüssig Extraktion kann auch eine Festphase für die Extraktion eingesetzt werden.
b) Erfindungsgemäß wird das Substanzgemisch nach der Vorreinigung mit mindestens einem Teil einer stationären Phase eines chromatographischen Trennsystems in Kontakt gebracht. Bevorzugt erfolgt dies durch Zuführung des Substanzgemischs zu einem Eluensstrom, der in das chromatographische Trennsystem eingeleitet wird. Das chromatographische Trennsystem umfasst erfindungsgemäß mindestens eine stationäre Phase. Dabei handelt es sich erfindungsgemäß um mindestens eine kationische stationäre Phase (Urinproben) und mindestens eine hydrophobe Phase (Serumproben).
   In einer bevorzugten Ausführungsform der vorliegenden Erfindung wird ein Substanzgemisch zur Analyse mit genau einem Teil des chromatographischen Trennsystems in Kontakt gebracht, dessen stationäre Phase genau mindestens einen kationischen Teil (Urinproben) oder einen hydrophoben Teil (Serumproben) umfasst. In einer weiteren bevorzugten Ausführungsform umfasst das chromatographische Trennsystem mindestens eine chromatographische Trennsäule, die mit stationären Phasen beladen ist.
   Kationische stationäre Phasen im Sinne der Erfindung tragen funktionelle Gruppen mit pKa-Werten im Bereich von ca. 1 (Silicabasiertes Material, derivatisiert mit Benzolsulfonsäuregruppen, pH stabil im Bereich 2-7). Erfindungsgemäß ist der pKa-Wert der kationischen stationären Phase des chromatographischen Trennsystems niedriger als der pKa-Wert des zur Vorreinigung eingesetzten Materials zur kationischen. In bevorzugten Ausführungsformen umfassen die kationischen, stationären Phasen, Festphasen wie diejenigen, die üblicherweise für die HPLC (High Performance Liquid Chromatography) verwendet werden und die funktionelle Gruppen mit den oben genannten Eigenschaften tragen. Neben starken Kationenaustauschern können auch schwache Kationenaustauscher als stationäre Phase verwendet werden.
   Hydrophobe stationäre Phasen im Sinne der Erfindung tragen hydrophobe Gruppen auf der Oberfläche. Hydrophobe Gruppen in diesem Sinne sind beispielsweise verzweigte oder unverzweigte, gesättigte, ungesättigte oder aromatische Kohlenstoffketten mit 4 - 30 Kohlenstoffatomen. In bevorzugten Ausführungsformen umfassen die hydrophoben, stationären Phasen, Festphasen wie diejenigen, die üblicherweise für die RP-HPLC (Reverse Phase High Performance Liquid Chromatography) verwendet werden und die hydrophobe funktionelle Gruppen tragen.
c) Anschließend wird der Eluensstrom durch die stationäre Phase des chromatographischen Trennsystems hindurchgeleitet. Dabei kann der Eluensstrom eine veränderliche oder eine isokratische (konstante) Zusammensetzung aufweisen. Sowohl organische Lösungsmittel, als auch wässrige Puffer und auch Gemische der beiden können als Eluens eingesetzt werden. In bevorzugten Ausführungsformen der vorliegenden Erfindungen beträgt der pH-Wert des Eluens pH = 2.3. Die Flussrate des Eluens durch das chromatographische Trennsystem wird durch die verwendeten stationären Phasen und die Längen und Querschnitte der verschiedenen Abschnitte des Trennsystems bestimmt. Dem Fachmann ist wohlbekannt welche Flussraten im Einzelfall zu wählen sind.
d) Nachfolgend wird der aus dem chromatographischen Trennsystem austretende Eluensstrom mithilfe eines Detektors hinsichtlich der Anwesenheit von Analyten untersucht. In bevorzugten Ausführungsformen wird als Detektor in diesem Sinne ein UV-Detektor (Diodenarraydetektor) eingesetzt. Daneben kommen aber auch andere Detektoren in Frage, die zum Nachweis der jeweils in Frage kommenden Analyte geeignet sind.
e) Danach wird das Detektorsignal in Abhängigkeit von der Zeit aufgezeichnet. Die daraus resultierende Datenmenge, die die Messdaten des Detektors in Abhängigkeit von der Zeit enthält wird hier Probenspektrum genannt.
f) Anschließend werden Signalausschlägen im Probenspektrum (Peaks) Retentionszeiten zugeordnet. Welche Signalausschläge als Peaks zu klassifizieren sind kann anhand von Verfahren entschieden werden, die dem Fachmann wohlbekannt sind. Zur Bestimmung von Retentionszeiten kann ein Interner Standard mit bekannter Retentionszeit verwendet werden, der der Substanzprobe vor der Analyse zugesetzt wird. Die vorliegende Erfindung umfasst aber auch andere, dem Fachmann bekannte Verfahren zur Bestimmung von Retentionszeiten.
g) Weiterhin wird das aufgezeichnete Probenspektrum zur Identifizierung von Analyten verwendet. Vorzugsweise wird dies durch den Vergleich des Probenspektrums mit den Probenspektren bekannter Substanzen erfolgen. Im Stand der Technik sind verschiedene Computerprogramme bekannt, die einen derartigen Vergleich ermöglichen. Ein Datensatz, der mehrere Probenspektren bekannter Substanzen umfasst wird hier als Bibliothek von Vergleichsspektren bezeichnet. Von der vorliegenden Erfindung umfasst sind ferner Verfahren bei denen die Identifizierung von Analyten in Substanzgemischen durch den Vergleich des aufgezeichneten Probenspektrums mit einer Bibliothek von Vergleichsspektren erreicht wird. Im Stand der Technik sind Computerprogramme zur Durchführung derartiger Vergleiche mit Bibliotheken von Vergleichsspektren bekannt. Im Rahmen der vorliegenden Erfindung wird zur Analyse von Urinproben die Urinbibliothek U1 (Grobosch, Schönberg, Lampe) und zur Analyse von Serumproben die Serumbibliothek S1 verwendet.

Gemäß dem erfindungsgemäßen Verfahren kann der Vorreinigung der zu untersuchenden Proben ferner eine Probenaufbereitung vorangehen. Im Rahmen dieser Probenaufbereitung können mithilfe von Trennverfahren unerwünschte Probenbestandteile abgetrennt werden. Zur Probenaufbereitung kann beispielsweise eine Filtration oder eine Zentrifugation durchgeführt werden, prinzipiell kommt allerdings auch jedes andere dem Fachmann bekannten Trennverfahren in Frage.

Teil der Erfindung sind ferner Verfahren, bei denen das Substanzgemisch vor der Vorreinigung mittels Extraktion und/oder vor der Überführung in das chromatographische Trennsystem, einem "Guard"-Schritt unterzogen wird. Dazu wird das Substanzgemisch mit mindestens einer weiteren stationären Phase in Kontakt gebracht. Die stationären Phasen für den "Guard"-Schritt können erfindungsgemäß hydrophob sein, oder funktionelle Gruppen mit einem pKa-Wert im Bereich von 8 - 14 tragen. Dieser Guard-Schritt hat sich für die Standzeiten der Extraktion als vorteilhaft erwiesen, ist aber nicht zwingend erforderlich.

Die Substanzgemische zur Analyse mit den erfindungsgemäßen Verfahren und Vorrichtungen sind vorzugsweise Körperflüssigkeiten, Standardlösungen oder Substanzproben.

Häufig eingesetzte Substanzgemische zur Analyse mit den erfindungsgemäßen Verfahren und Vorrichtungen sind Urinproben. Bei der erfindungsgemäßen Analyse von Urinproben umfasst die Vorreinigung eine vollautomatische on-line Festphasenextraktion. On-line bedeutet in diesem Zusammenhang, dass die verwendete Lösung zur Elution nach dem Kontakt mit dem, zur Extraktion verwendeten, Festphasenmaterial in das chromatographische Trennsystem überführt wird.

Weitere Substanzgemische zur Analyse mit den erfindungsgemäßen Verfahren und Vorrichtungen sind **Serumproben.** Bei der erfindungsgemäßen Analyse von Serumproben umfasst die Vorreinigung eine flüssig-flüssig Extraktion oder eine Festphasenextraktion.

Weitere Substanzgemische zur Analyse mit den erfindungsgemäßen Verfahren und Vorrichtungen sind Proben von Speichel, Mageninhalt, Gallenflüssigkeit, Sputum oder Liquor.

Weitere Substanzgemische zur Analyse mit den erfindungsgemäßen Verfahren und Vorrichtungen sind Standardlösungen.

Besonders geeignet ist das erfindungsgemäße Verfahren zur Bestimmung, in Urin, von Alkaloiden, Opiaten, Opioiden, Amphetaminderivaten oder pharmazeutischen Wirkstoffen, sowie ferner den Muttersubstanzen und Metaboliten dieser Stoffe.

Analyte, die mit den erfindungsgemäßen Vorrichtungen und Verfahren in Serum nachgewiesen werden können sind z.B. Antidepressiva, Antiepileptika, Barbiturate, Neuroleptika, Opiate, Opioide, Schlafmittel, Schmerzmittel, Tranquilizer, Benzodiazepine, Antidiabetika, Antimikrobielle Substanzen, Antiarrhytmika, Antihistaminika, Anticholinergika, Betablocker oder Sympathomimetika. sowie ferner die Muttersubstanzen und die Metabolite dieser Stoffe.

Im vorliegenden Zusammenhang werden als Muttersubstanzen der oben genannten bevorzugten Analyte, chemische Verbindungen bezeichnet, aus denen durch metabolische Reaktionen im menschlichen Körper die oben genannten Analyte hervorgehen können. Als Metabolite der oben genannten Analyte hingegen werden chemische Verbindungen bezeichnet, die durch metabolische Reaktionen im menschlichen Körper aus den oben genannten Analyten hervorgehen können.

Die vorliegende Erfindung umfasst ferner eine Vorrichtung zur Analyse von Substanzgemischen, die wenigstens die folgenden Teilkomponenten umfasst.
a) Probenaufnahmeteil,
b) Vorreinigungseinheit, wobei die Vorreinigungseinheit mindestens eine Festphase zur Extraktion enthält,
c) chromatographisches Trennsystem, wobei das chromatographische Trennsystem eine stationäre Phase umfasst, die mindestens einen kationischen (bevorzugt Urinproben) und hydrophoben (bevorzugt Serumproben) Teilabschnitt umfasst,
d) Leitvorrichtung, die es ermöglicht einen Eluensstrom entweder entlang von Leitungsweg L1 (zuerst durch die kationische Festphasen-Vorreinigungseinheit und dann durch einen Teilabschnitt der stationären Phase des chromatographischen Trennsystems) oder entlang von Leitungsweg L2 (direkt durch einen Teilabschnitt der stationären Phase des chromatographischen Trennsystems) oder durch die nicht ionische Festphasen-Vorreinigungseinheit zu führen.
e) Pumpeinheit zum Pumpen von Eluensströmen,
f) Detektoreinheit.

Zur Erfindung gehört weiterhin die Verwendung der erfindungsgemäßen Verfahren und Vorrichtungen zur Bestimmung von Fremdstoffen in Körperflüssigkeiten. Insbesondere ist demnach die Verwendung der erfindungsgemäßen Verfahren und Vorrichtungen zur Bestimmung von Fremdstoffen in Urin und Serum umfasst. Ferner umfasst die vorliegende Erfindung insbesondere die Verwendung der erfindungsgemäßen Verfahren und Vorrichtungen im Rahmen der Notfalldiagnostik, der klinischen Toxikologie, der Suchtstoffarialytik oder im Rahmen forensischer Untersuchungen.

In der Praxis ist es von großer Bedeutung, dass das Zeitfenster zum Nachweis zahlreicher Analyte in Urin größer ist als in Serum, während andere Analyte besser in Serum nachgewiesen werden können. Daher besteht ein wesentlicher Vorteil der erfindungsgemäßen Vorrichtung darin, dass sie auf einfache Weise eine Kombination der Urinanalyse mit der Analyse von Serumproben innerhalb eines Geräts ermöglicht. Aus dieser Zusammenführung von Funktionen in einem Gerät ergeben sich zahlreiche Vorteile, wie beispielsweise ein ökonomischerer Betrieb und ein geringerer Platzbedarf im Labor. Außerdem müssen zahlreiche Gerätekomponenten, wie Probeaufnahmeteil, Pumpen, Detektor und Datenverarbeitungseinheit nicht in doppelter Ausführung vorhanden sein, was im Zusammenhang mit dem rapide zunehmenden Automatisierungsgrad im Bereich dieser Komponenten, eine erhebliche Kostenersparnis zur Folge hat.

Die erfindungsgemäßen Verfahren erlauben die schnelle Detektion eines breiten Spektrums chemischer Verbindungen. Sie sind gut zur Automatisierung geeignet und können ohne großen Aufwand in bestehende automatisierte Laborverfahren integriert werden. Ihr Einsatz in der klinischen und forensischen Routinediagnostik sollte daher zu deutlichen Fortschritten bei der präzisen, einfachen und kostengünstigen Probenanalyse führen.

Die Erfindung soll nachfolgend durch Ausführungsbeispiele näher erläutert werden.

### Ausführungsbeispiel

### Chemikalien

Dichlormethan (p.A.), Methanol (p.A.), Phosphorsäure (85% p.A:), Kaliumdihydrogenphosphat (p. A.), Kaliumhydroxid (p. A.), Salzsäure (25% p.A.) und Tris(hydroxymethyl)-aminomethan (Trispuffer) wurden von Merck (Darmstadt, Deutschland) bezogen. Acetonitril wurde von Riedel de Haen (Seelze, Deutschland) geliefert und Wasser durch ein Osmosesystem (MembraPure, Bodenheim, Deutschland) gereinigt. Das Glucuronidasereagenz wurde von Roche (Mannheim, Deutschland) bezogen, Neostigminbromid (Internal Standard - Urin Methode, IS-Urin Methode), 5-(p-Methylphenyl)-5-Phenylhydantoin (MPPH, Intemal Standard-Plasma-/Serummethode, IS-Plasma-/Serummethode) und alle anderen untersuchten Substanzen wurden von Promochem (Wesel, Deutschland) geliefert.

### Ausrüstung

Das HPLC-System war mit einem ternären Pumpensystem (LC-10 ADVP), einem Systemcontroller (SCL-10 AVP), einem Lösemittelentgaser (DGU-14 A), einem Autoinjektor (SIL-10 AF), einem Ofen (CTO-10 ACV P), einer Gradienteneinheit (FCV-10 ALVP), einer Optionbox, zwei Hochdruckventillen (FCV-12 AH), zwei Säulenschaltventilen (FCV-14 AH) und einem DAD-Detektor (SPD-M10 AVP) ausgestattet. Alle HPLC-Bausteine wurden von der Firma Shimadzu, Duisburg, Deutschland hergestellt. Die Extraktionssäule (StrataX-CW^{™} 20 x 2.1 mm, 35 µm) und die zwei analytischen Säulen (LunaSCX^{™} 150 x 4.6 mm, 5 µm) inklusive Vorsäulen für die Urinmethode wurden von Phenomenex (Aschaffenburg, Deutschland) bezogen. Für die Plasma-/Serummethode wurde eine C8 Umkehrphase-Säule (Nucleosil^{™} 100 C8 (200 x 4.0 mm, 5 µm) und eine entsprechende C8 Umkehrphase-Vorsäule (Nucleosil^{™} 100 C8 (50 x 4.0 mm, 5 µm, beide von Fa. VDS Optilab, Berlin, Deutschland) eingesetzt. Die Ofentemperatur betrug 40 °C. Für alle Methoden erfolgte die Messung in einem Wellenlängenbereich von 195 bis 370 nm. Die ausgewählten Wellenlängen für die Bildschirmdarstellung lagen bei 205/235 nm (Urinmethode) und 210 nm (Plasma-/Serummethode). Die Daten wurden mit der LC Solution^{™} Software 1.21. der Firma Shimadzu aufgenommen und ausgewertet.
Als Beladungspuffer diente 0.01 M Phosphatpuffer pH 6.0, als erste Waschlösung Acetonitril/Wasser (ACN/H₂O, 90/10, V/V) und als zweite Waschlösung Wasser. Für die basische flüssig/flüssig Extraktion wurden Dichlormethan und 0.2 M Trispuffer (pH 9.1) eingesetzt, Die mobile Phase setzte sich aus Laufmittel A: 31.5% ACN/H₂O (90/10, VN) und Laufmittel B: 68.5% 0.05 M Phosphatpuffer (pH 2.3) (Urinmethode) und Laufmittel A: 35.0% ACN/H₂O (90/10, V/V) und Laufmittel B: 65.0% 0.05 M Phosphatpuffer (pH 2.3) (Plasma-/Serummethode) zusammen.

### Stammlösungen

### Urinmethode:

Für die Interne Standard Lösung wurde eine Neostigminbromid Stammlösung (1 mg/mi) auf die Konzentration 15 µg/ml mit Beladungspuffer verdünnt. Die Interne Standard Lösung wurde im Kühlschrank bei 5-8°C aufbewahrt.
Eine "Performance Test Probe"-Lösung wurde durch die Verdünnung von kommerziellen methanolischen Standardlösungen der Substanzen Codein, des Methadonmetabolit 2-Ethyliden-1.5-dimethyl-3.3-diphenylpyrrolidin (EDDP), Methylendioxyamphetamin (MDA), Morphin, Neostigminbromid und Scopolamin (jeweils 1 mg/ml) zu 1 µg/ml mit Beladungspuffer hergestellt.

### Plasma-/Serummethode:

Die Interne Standard Lösung wurde durch Auflösen von 50.0 mg MPPH in 100 ml Methanol hergestellt.
Die Extraktionslösung für die flüssig/flüssig-Extraktion wurde durch Verdünnen von 0.5 ml MPPH Stammlösung mit Dichlormethan (2.5 µg/ml) hergestellt. Beide Lösungen wurden im Kühlschrank aufbewahrt.
Eine "Performance Test Probe"-Lösung wurde durch Verdünnung von kommerziellen methanolischen Stammlösungen der Substanzen Curantyl, MPPH und Diazepam auf 0.1 mg/ml mit mobiler Phase hergestellt.

### "Performance Test Probe"

### Urinmethode:

Insgesamt 1.5 ml der "Performance Test Probe"-Lösung wurden in ein 1.5 ml-Polypropylen Probengefäß überführt, bei 15000 g 5 min zentrifugiert und in den Autoinjektor gestellt. Das Injektionsvolumen betrug 1.0 ml.

### Plasma-/Serummethode:

Insgesamt 100 µl der "Performance Test Probe"-Lösung wurden in ein Probengefäß überführt und in den Autoinjektor gestellt. Das Injektionsvolumen betrug 50 µl.

### Probenvorbereitung

### Urinproben:

Die Urinproben wurden bei 15 000 g für 5 min zentrifugiert und anschließend 1.0 ml in ein 2.0 ml Polypropylen Probengefäß überführt, mit 500 µL Interner Standard Lösung versetzt, gemischt und nochmals 5 min bei 15 000 g zentrifugiert. Die Proben wurden in den Autoinjektor gesetzt. Das Injektionsvolumen betrug 1.0 ml.

### Glucuronid Hydrolyse:

Für die Bestimmung von Psilocin im Urin wurde vor der Probenvorbereitung eine Glucuronidspaltung durch Hydrolyse durchgeführt. Die Probe (1.0 ml Urin) wurde mit 100 µl Glucuronidasereagenz versetzt und 2 h bei 45° C im Heizblock hydrolysiert. Anschließend wurde die Probe zentrifugiert und 1.0 ml in ein weiteres 2.0 mL Polypropylengefäß überführt, mit 500 µL Interner Standard Lösung versetzt, gemischt und nochmals 5 min bei 15 000 g zentrifugiert. Die Proben wurden in den Autoinjektor gesetzt. Das Injektionsvolumen betrug 1.0 ml.

### Plasma-/Serumproben:

In einem 1.5 ml Polypropylen Probengefäß wurden 0.5 ml Plasma-/Serum vorgelegt, mit 0.1 ml Trispuffer (pH 9.1) und 0.4 ml Extraktionslösung versetzt und 2 min geschüttelt. Die Proben wurden 2 min bei 15 000 g zentrifugiert und 0.2 ml der organischen Phase in ein zweites 1.5-ml Polypropylen Probengefäß überführt und unter Stickstoff bei 40 ± 3° C eingedampft. Der Rückstand wurde mit 100 µl mobiler Phase aufgenommen und 15 s geschüttelt. Die Proben wurden in den Autoinjektor gesetzt. Das Injektionsvolumen betrug 50 µl.

### Durchführung der Analyse

### Urinmethode:

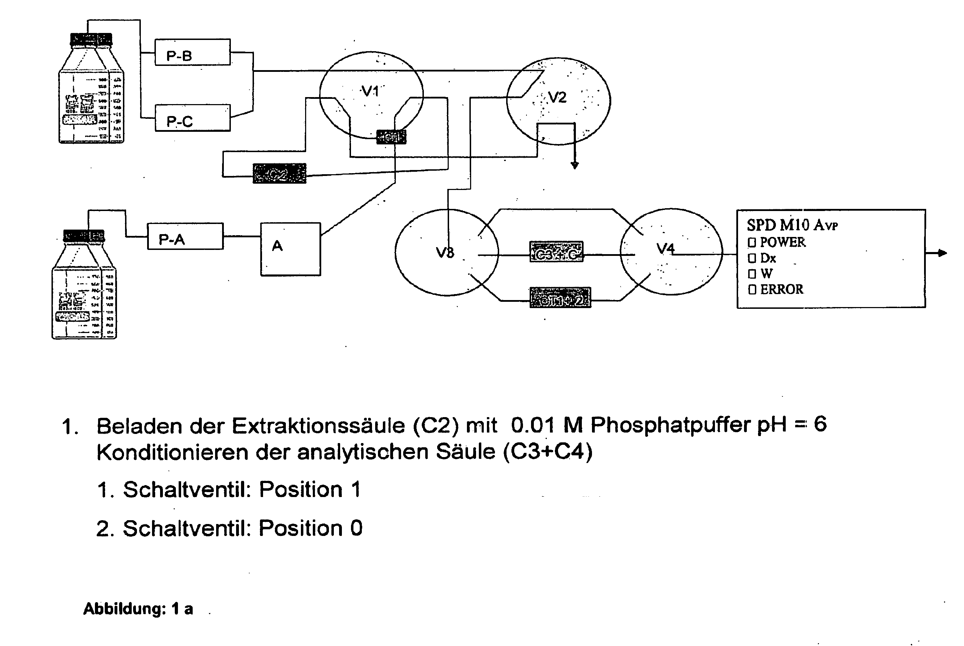

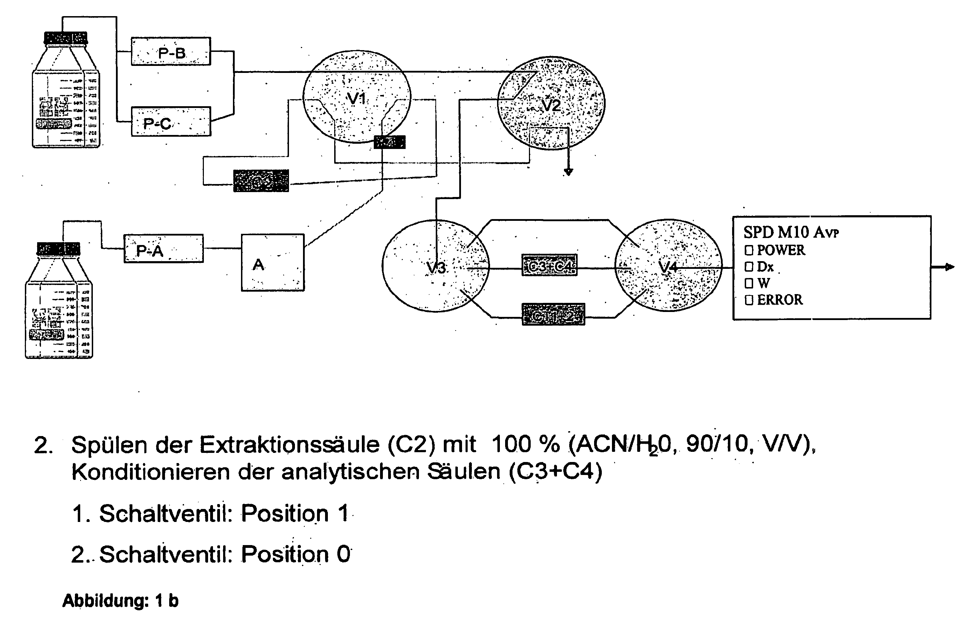

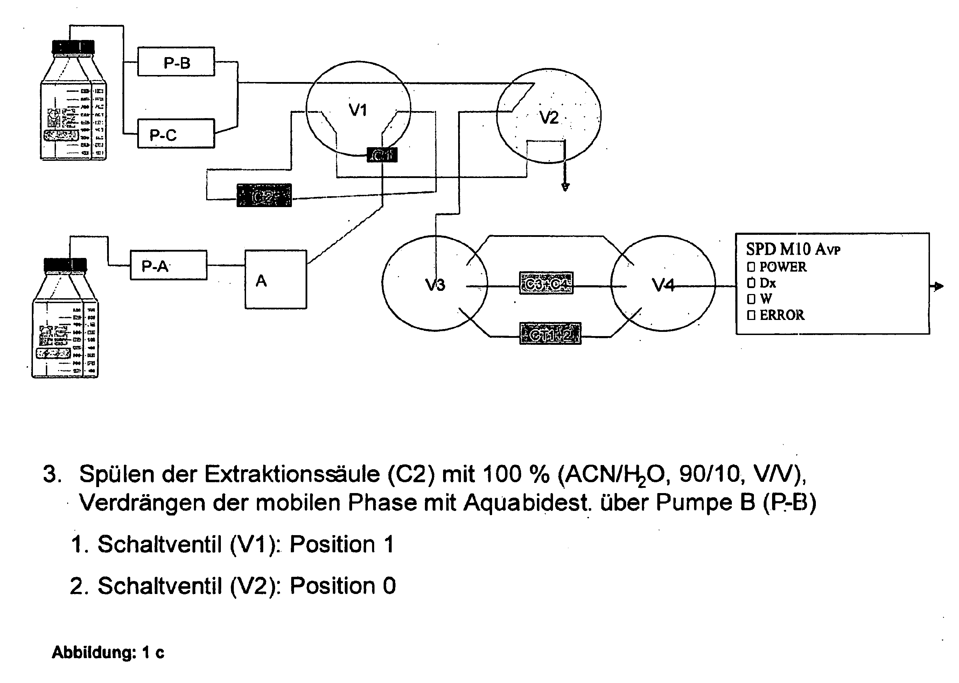

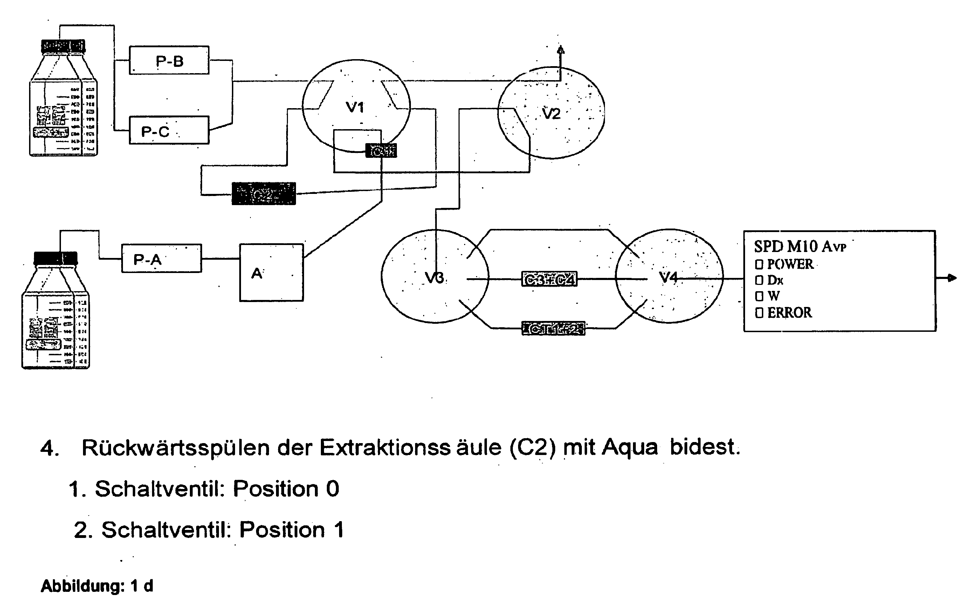

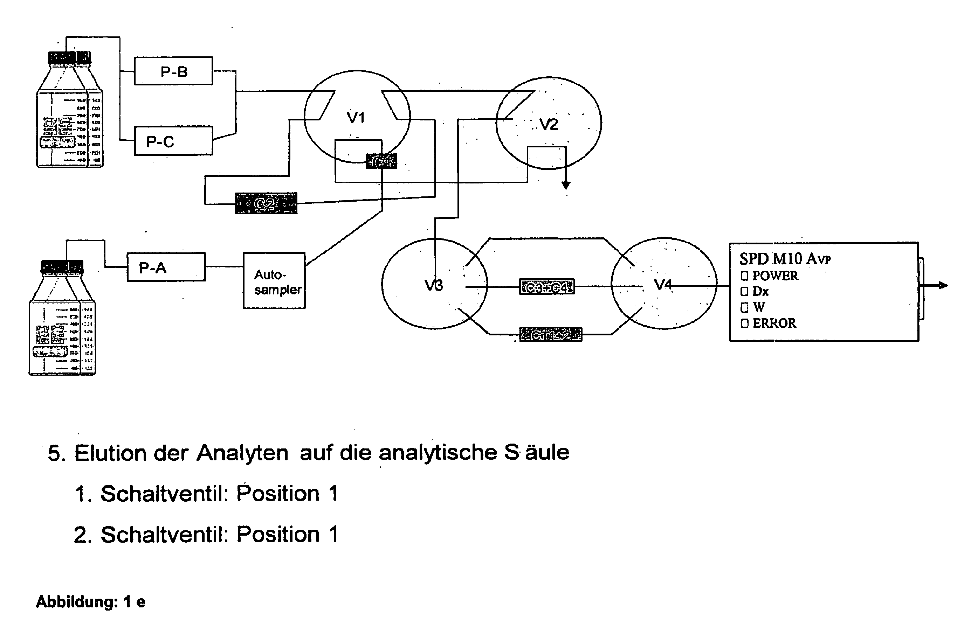

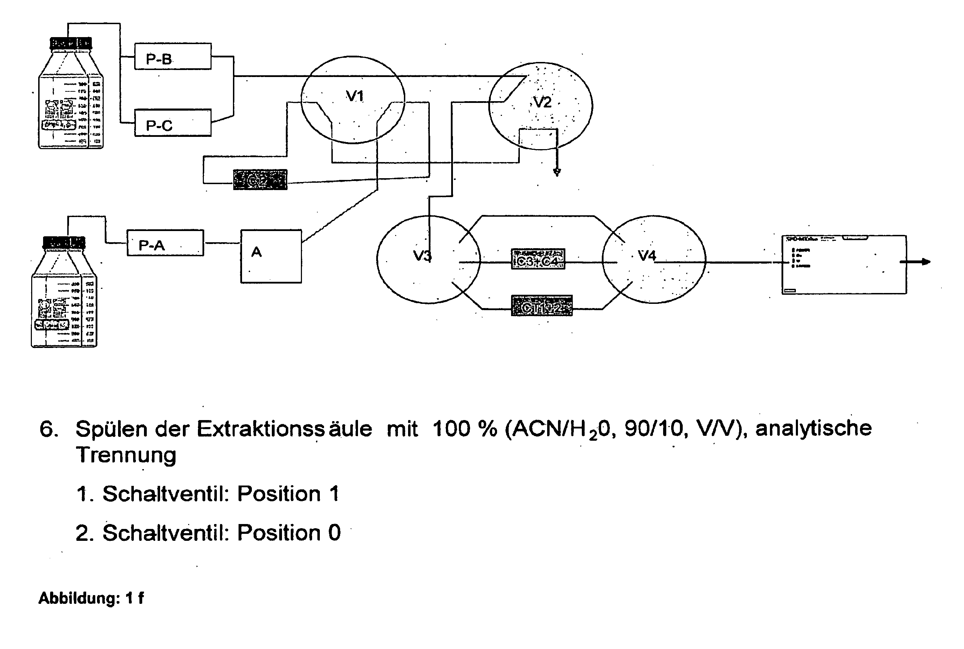

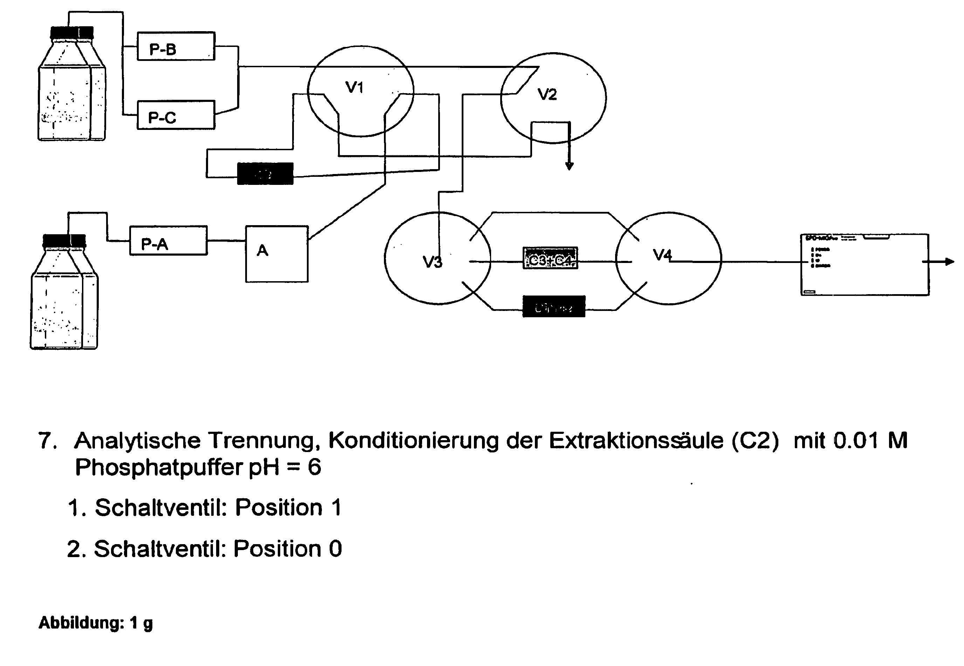

Nach der Probenvorbereitung wurde die Urinprobe in dem 2.0 ml Polypropylen-Probengefäß in den Autoinjektor gesetzt und das Analysenprogamm für die Urinanalytik (On-line Extraktion und analytische Trennung) über die LC Solution^{™}-Software gestartet. Die Autosampler-Nadel wird bis zu 0.6 cm über dem Gefäßboden in das Probengefäß eingetaucht, um ein Ansaugen möglicher Rückstände vom Gefäßboden zu vermeiden. Ein Aliquot von 1 ml Urinprobe wird über die C18 Vorsäule mit 0.01 M Phosphatpuffer pH 6.0 (Beladungspuffer) auf die Extraktionssäule (StrataX-CW^{™} 20 x 2.1 mm, 35 µm) gebracht. Das Extraktionsmaterial besteht aus einer Mischbettphase, die durch hydrophobe- und schwache Kationenaustauscher-Eigenschaften charakterisiert ist. Bei pH 6 positiv geladene Analyten wurden an dem bei pH 6 aktivierten schwachen Kationenaustauschermaterial reteniert, während die Matrix in den Abfall eluiert wurde. Der Beladungspuffer und die folgende erste Spüllösung (ACN/H₂O, 90/10, VN) wurden über Pumpe A (LC-10 ADVP) transportiert. Die Pumpe A ist mit einer Gradienteinheit (FCV-10 ALVP) verbunden, dadurch wird der Transport von vier verschiedenen Laufmitteln über Pumpe A ermöglicht. Der Beladungsschritt mit Beladungspuffer und der anschließende erste Spülschritt mit ACN/H₂O, 90/10, VN dauerten jeweils 2.5 min, die Flussrate betrug 2 ml/min. Durch den hydrophilen und anschließend lipophilen Spülschritt werden störende Matrixbestandteile eluiert. Während der ersten 4.5 min der On-line Extraktion wurden die analytischen Säulen (2 x LunaSCX^{™} 150 x 4.6 mm, 5 µm) über Pumpe C (LC-10 ADVP) mit mobiler Phase (Laufmittel A: 31.5% ACN/H₂O (90/10, v/v) und Laufmittel B: 68.5% 0.05 M Phosphatpuffer pH 2.3, Flussrate 1.2 ml/min) konditioniert. Pumpe C war mit Pumpe B (LC-10 ADVP) über ein T-Stück verbunden. Nach 4.5 min wurden das Ventil 1 und das Ventil 2 umgeschaltet, um den zweiten Spülschritt mit Wasser vorzubereiten. Die zweite Spüllösung (Wasser) wurde 0.5 min über Pumpe B in den Abfall gepumpt. Durch diesen Schaltschritt wurde die Mobile Phase aus den Kapillaren verdrängt, um eine frühzeitige Elution der Analyten von der Extraktionssäule zu verhindern. Nach insgesamt 5 min wurden die beiden Ventile erneut umgeschaltet und der zweite Spülschritt mit Wasser über Pumpe B entgegen der Beladungsrichtung durchgeführt. Die geladenen Analyten sind während des zweiten Spülschrittes im Rückwärtsmodus weiterhin an der Kationenaustauscherfunktion fixiert, während mögliche Matrixbestandteile vom Extraktionssäulenkopf, die zu einer Kontamination der eingesetzten Säulen führen könnten, eluiert wurden. Die Flussrate wurde auf 3 ml/min erhöht, so dass die benötigte Zeit für diesen Spülschritt auf 1 min reduziert werden konnte. Die Konditionierung der analytischen Säulen erfolgte während dessen über Pumpe A. Für die anschließende Elution der Analyten von der Extraktionssäule wurde durch erneutes Schalten der Ventile die Extraktionssäule mit den analytischen Säulen in Reihe geschaltet. Die Neutralisation der schwachen Kationenaustauscherfunktion (Carboxylgruppe) durch die mobile Phase (pH 2.3) führte zur Elution der Analyten von der Extraktionssäule. Der isokratische Elutionsschritt wurde ebenfalls im Rückwärtsmodus durchgeführt, um eine Trennung der Analyten auf der Extraktionssäule und eine evtl. dadurch bedingte Peakverbreiterung zu vermeiden. Die Mobile Phase wurde über Pumpe C transportiert, die Flussrate betrug 1.2 ml/min. Durch die Kopplung von zwei analytischen Säulen mit einer Gesamtlänge von 30 cm (2x LunaSCX^{™} 150 x 4.6 mm, 5 µm) konnte die Auflösung erhöht und die Trennung von Methadon, Morphin und dem Heroinmetaboliten 6-Acetylmorphin erzielt werden. Die analytischen Säulen wurden in einem Säulenofen (CTO-10 ACVP) auf 40°C temperiert. Während der analytischen Trennung wurde die Flussrate von Pumpe A auf 0.5 ml/min herabgesetzt. Fünf Minuten vor Beendigung der Analyse wurden die Ventile in die Ausgangsposition geschaltet und die Extraktionssäule dadurch von den analytischen Säulen getrennt. Dadurch konnte die Extraktionssäule erneut mit der ersten Spüllösung (ACN/H₂O, 90/10, V/V) gespült und anschließend mit Beladungspuffer für die nächste Analyse konditioniert werden. Der Schaltplan mit den Extraktions-, Elutions- und analytischen Trennungsschritten ist in Abbildung 1 dargestellt und in Tabelle 1 zusammengefasst.
(Frage: Die angegebenen HPLC-Bauteile beziehen sich auf das "Entwicklungssystem". Für den kommerziellen Einsatz wird die Nachfolgeserie (Pumpen, Autosampler etc. verwendet), die in ihrer Zusammensetzung etwas von dem beschriebenen System abweicht (z.B. Pumpe B und C zusammengefasst in einer Doppelpumpe). Kann das Ausführungsbeispiel anhand des "Entwicklungssystems" dargestellt werden, oder muss der Text bezügl. des neuen Systems überarbeitet werden?

### Plasma-/Serummethode:

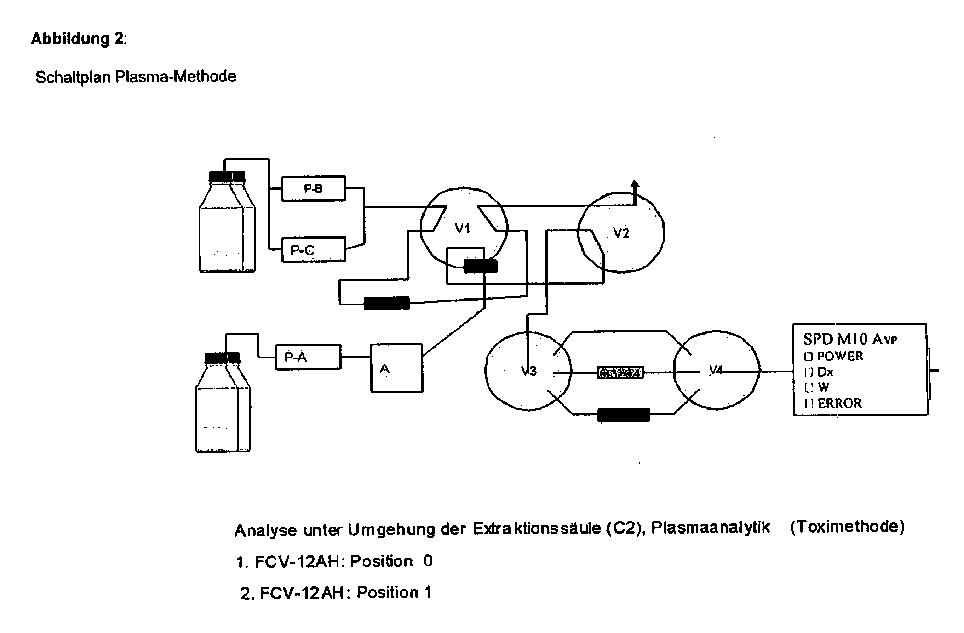

Im Anschluss an die flüssig/flüssig-Extraktion wurde die Probe in den Autoinjektor gesetzt und das Analysenprogramm für die Serum/Plasma-/Serummethode-Analytik über die Software gestartet. Die Säulenschaltventile wurden auf die Position der C8 Umkehrphase HPLC-Vorsäule und analytische Säule (Nucleosil^{™} 100 C8 (50 x 4.0 mm, 5 µm) + Nucleosil^{™} 100 C8 (200 x 4.0 mm, 5 µm)) geschaltet. Vor der Analyse der Plasma-/Serumprobe wurde eine Spülanalyse programmiert (Laufmittel B: 20%-65% linear über 10 min, plus 10 min isokratisch unter den Analysenbedingungen (Laufmittel A: 35.0% ACN/H₂O (90/10, v/v) und Laufmittel B: 65.0% 0.05 M Phosphatpuffer pH 2.3, Flussrate 0.7 ml/min), um die Säule für die Trennbedingungen zu konditionieren. Die Analysenzeit betrug 50 min, der Schaltplan für die Plasma-/Serummethode ist in Abbildung 2 dargestellt.

### Validierung

### Urinanalytik:

Die Validierung wurde exemplarisch anhand der "Performance Test Probe" vorgenommen, die 6 verschiedene Substanzen unterschiedlicher Struktur und pKa-Werte (Tabelle 2) enthält. Neben dem Einsatz für die exemplarische Validierung der Urinmethode, findet die "Performance Test Probe" Anwendung als Qualitätskontrolle/"Performance Test" des Systems. Die folgenden Validierungsparameter wurden bestimmt: Extraktionsausbeute (Wiederfindungsrate), Bestimmungsgrenze, Linearitätsbereich, Reproduzierbarkeit, Präzision, Selektivität, Verschleppungseffekte und die Chargenreproduzierbarkeit der verwendeten Extraktions- und HPLC-Säulen. Zusätzlich wurde das Verfahren durch die Analyse authentischer Patientenproben geprüft.
Die Bestimmung der oben aufgeführten Validierungsparameter wurde nach den Richtlinien der FDA [1] durchgeführt.
Die Selektivität der Methode konnte durch die Analyse von sechs Leerurinen unterschiedlicher, gesunder Probanden demonstriert werden. Zu den Retentionszeiten der Analyten in der Performance Test Probe traten keine Störpeaks im Chromatogramm auf. Die Ergebnisse der Validierung sind in Tabelle 3 zusammengefasst.

Versuche zum Verschleppungseffekt zeigten, dass nach einer gemessenen Konzentration >15.0 µg/ml ein Leerwert analysiert werden sollte, um mögliche Verschleppungen in eine neue Analyse zu vermeiden. Diese Konzentration entspricht der oberen Bestimmungsgrenze und einer Absorption > 1500 mAU.
Die Untersuchung der Chargenreproduzierbarkeit führte zu folgenden Ergebnissen: Der Variationskoeffizient der Wiederfindung von Extraktionssäule zu Extraktionssäule war < 3.8 % (n = 6) und < 5 % (n = 6) von HPLC zu HPLC-Säule.

Die"Performance Test Proben" sind bei Aufbewahrung im Gefrierschrank mindestens 65 Tage stabil, die Inter-Versuchspräzision war ≤ 8 %.

### Plasma-/Serummethode:

Die Validierung der Plasma-/Serummethode in dem beschriebenen HPLC System erfolgte anhand eines empfohlenen Tests zur Genauigkeitsüberprüfung [2]. Der Test enthielt die Substanzen Histamin (0.1 mg/ml) zur Bestimmung der Totzeit, Koffein (0.1 mg/mi) zur Bestimmung der Genauigkeit des Autoinjektors , MPPH (0.1 mg/ml) zur Überprüfung der Retentionszeit und Benzen (1.0 mg/ml) zur Überprüfung der Auflösung und Kontrolle der Reproduzierbarkeit der Spektrenaufnahme. Die folgenden Parameter wurden bestimmt: die Totzeit für die Methode, Genauigkeit des Autoinjektors, Reproduzierbarkeit und Präzision der Retentionszeiten. Das Injektionsvolumen der Testlösung betrug 10 µl.
Die Präzision von HPLC-System-zu-HPLC-System wurde durch die Analyse der folgenden Kontrolllösung (n = 6) in zwei verschiedenen HPLC Systemen untersucht: Curantyl, MPPH and Diazepam (c = 0.1 mg/ml). Das Injektionsvolumen der Testlösung betrug 50 µl.
Die Totzeit (t₀) betrug für die Methode t₀ ± VK %= 2.84 ± 0 % (n = 6). Die Anforderungen an die Genauigkeit des Autoinjektors, die Auflösung und Reproduzierbarkeit der Spektrenaufnahme wurden erfüllt. Die Berechnung der Retentions- und relativen Retentionszeiten erfolgte anhand von MPPH. Die gemessene Retentionszeit ± VK (%) betrug 15.31 min ± 0.02 % (n = 6).
Der Vergleich der Methode von HPLC zu HPLC System ergab einen VK < 6.6 %.

### Zusammenfassung und Beispiele

In dem beschriebenen System wurden zwei analytische Analysenstrecken (eine für die Urinanalytik, eine für die Plasma-/Serummethode) erfolgreich etabliert und validiert. Aufgrund ihrer hohen Trennleistung und der Identifizierung einer großen Zahl von Analyten, erweisen sich beide Methoden als geeignet für die systematische toxikologische Analyse. Abhängig von der vorhandenen Probenmatrix und der jeweiligen analytischen Fragestellung kann das Probenmaterial mit einer der beiden Methoden untersucht werden.

### Kombination der beiden Methoden

Das Schalten zwischen den verschiedenen Methoden erfolgt anhand der Software, wobei vor der jeweiligen Methode eine Equilibrierungssequenz gestartet wird. Das Injektionsvolumen, die Methodenparameter und der jeweilige Analysenreport sind in einer Vorlage für jede Methode gespeichert, um die Handhabung zu erleichtern und Fehler auszuschließen. Im Anschluss an eine Analyse wird die entsprechende Säule gespült und dann in den Standby-Modus gesetzt. In Tabelle 4 ist ein Beispiel für eine Analysensequenz für die Urin- und Serumanalytik gezeigt.
Es wurden weder Basislinienschwankungen noch Verschleppungseffekte durch das Schalten zwischen den Methoden beobachtet.

### Peakidentifizierung

Die Peakidentifizierung erfolgt durch den Spektrenvergleich (λ = 195-370 nm) mit einer kommerziell erhältlichen, ca. 2600 Spektren umfassenden UV Spektrenbibliothek [2]. Zusätzlich werden die Retentions- und relativen Retentionszeiten der Peaks mit denen in einer für die jeweilige Methode separaten Bibliothek gespeicherten chromatographischen Daten verglichen. Auftretende Metabolitenspektren und endogene Peaks (Matrixspektren) werden ebenfalls gespeichert, um eine sichere Substanzidentifizierung zu ermöglichen.

Bei der Urinmethode werden zwei Chromatogramme, jeweils bei 205 und 235 nm auf dem Bildschirm angezeigt. Die Wahl dieser Detektionswellenlängen ermöglicht ein zusätzliches Identifizierungsmerkmal für Amphetamine, die bei 235 nm kaum eine Absorption zeigen. Neostigmin zeigt den gleichen Effekt.

Bei der Serummethode wird das Chromatogramm bei 210 nm dargestellt.

### Anwendungsbeispiele

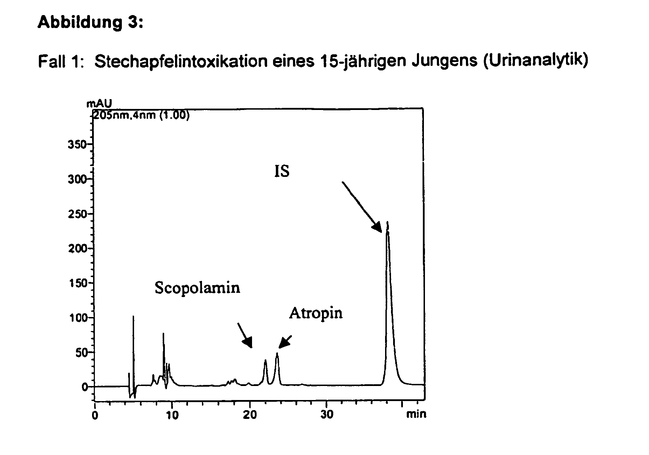

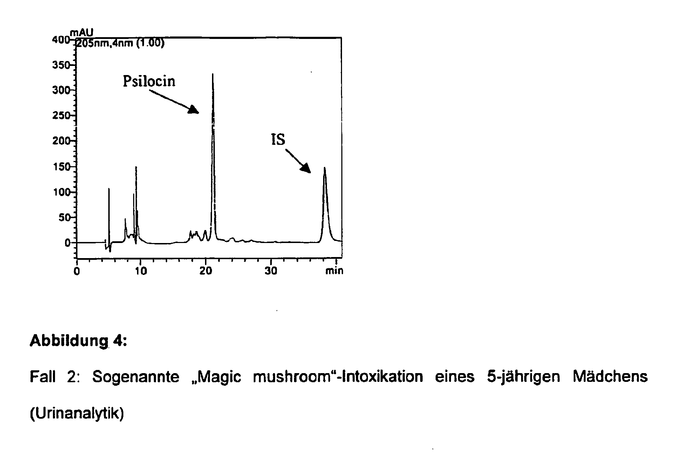

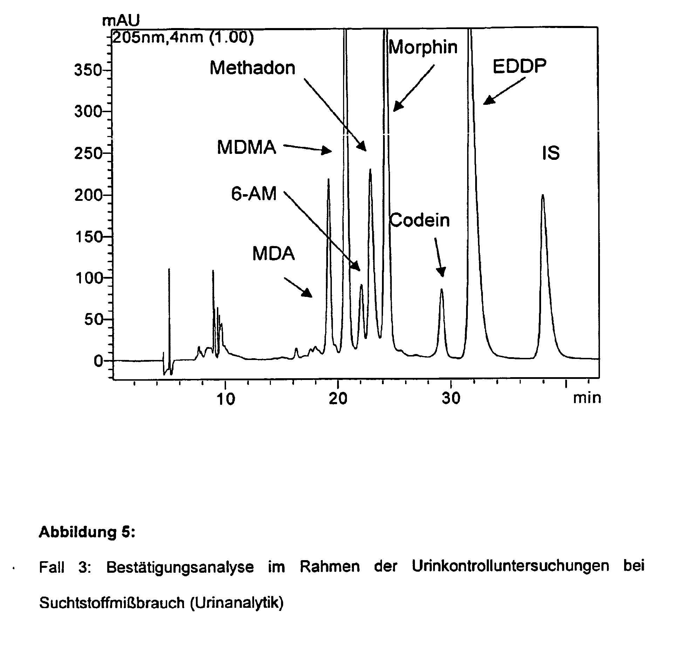

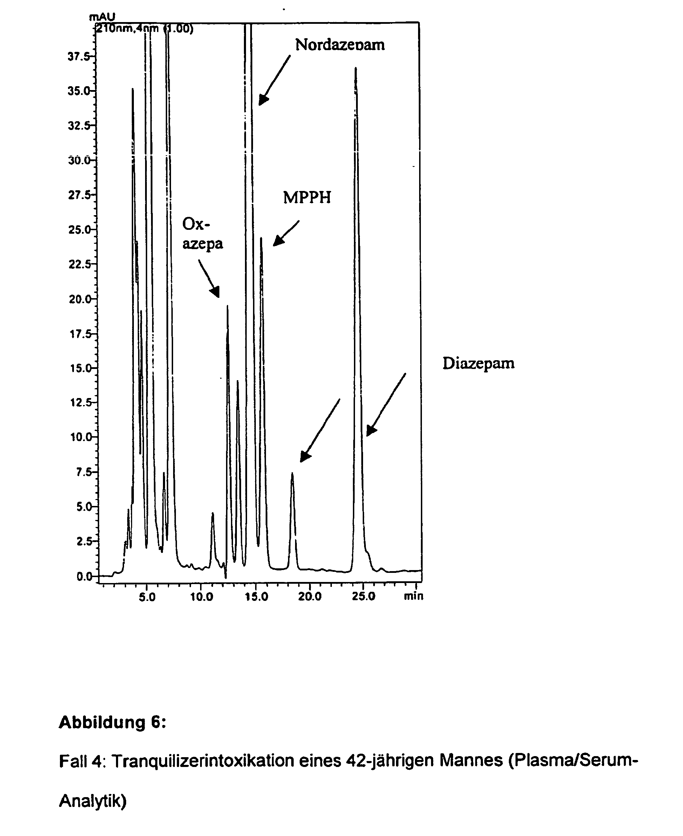

Mit dem entwickelten analytischen System wurden mehr als 600 Proben (klinisch toxikologische und Bestätigungsproben im Rahmen von Urinkontrolluntersuchungen) untersucht. Die folgenden Beispiele (Abbildung 3-6) sollen die Anwendbarkeit des Systems beweisen.

### Literaturstellen

[1] FDA, http://www.fda.gov/cder/guidance/4252ful.pdf, 2001.
[2] Pragst et al., UV spectra of toxic compounds. Database of photodiode array UV spectra of illegal and therapeutic drugs, pesticides, ecotoxic substances and other poisons. Edition 2001, Verlag Dr. Dieter Helm, Heppenheim, 2001.

**Tabelle 1: Zusammenfassung Urinanalytik-Methode**

| **Arbeitsschritt** | | **Pumpe A** | | **Pumpe B** | | **Pumpe C** | |
|---|---|---|---|---|---|---|---|
| | **Zeit (min)** | **Flussrate (ml/min)** | **Lösung** | **Flussrate (ml/min)** | **Lösung** | **Flussrate [ml/min)** | **Lösung** |
| Beladen | 0 - 2.5 | 2.5 | 1 | 0 | - | 1.2 | 4 |
| 1. Spülschritt | 0 - 4.5 | 2.5 | 2 | 0 | - | 1.2 | 4 |
| Vorbereitung für zweiten Spülschritt | 4.5 - 5.0 | 2.5 | 4 | 3.0 | 3 | 1.2 | 4 |
| 2. Spülschritt | 5.0 - 6.0 | 1.2 | 4 | 3.0 | 3 | 0 | - |
| Elution und analytische Trennung | 6.0 - 35.0 | 0.5 | 4 | 0 | - | 1.2 | 4 |
| Analytische Trennung, Spülen der Extraktionssäule | 35.0 - 37.5 | 2.5 | 2 | 0 | - | 1.2 | 4 |
| Analytische Trennung, Konditionieren der Extraktionssäule | 37.5 - 41.0 | 2.5 | 1 | 0 | - | 1.2 | 4 |

| | | | | | | | |
|---|---|---|---|---|---|---|---|
| *1 = Befadungspuffer,* 2 = *Erste Spullösung (ACN*/*H₂O*, *90*/*10, V*/*V*), *3 = Zweite Spüllösung (Wasser),* *4 = mobile Phase* | | | | | | | |

**Tabelle 2: Performance Test Probe**

| **Name** | | **pKa-Wert** | **Konzentration (µg/mL)** | **Strukturformel** |
|---|---|---|---|---|
| | Codein | 8.0, 10.0 | 1.0 | 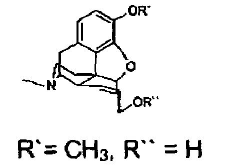 |
| | 2-Ethyliden-1.5-dimethyl-3.3-diphenyl-pyrrolidin (EDDP) | 9.6 | 1.0 | 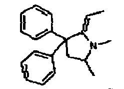 |
| | Methylendioxyamphetamin (MDA) | 9.7 | 1.0 | 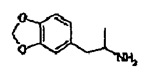 |
| | Morphin | 8.0,10.0 | 1.0 | 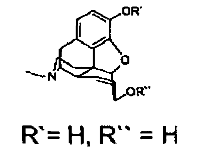 |
| | Neostigminbromid | 12 | 5.0 | 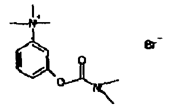 |
| | Scopolamin | **7.6** | 1.0 | 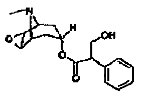 |

**Tabelle 3: Validierungsdaten**

| **Substanz** | **Wiederfindung (%) ±** | **Variationskoeffizient** | **Variationskoeffizient** | **Bestimmungsgrenze** | **Linearität** | |
|---|---|---|---|---|---|---|
| | **Standardabweichung** | **(Wiederfindungsrate) (%)** | **(Retentionszeit) (%)** | **(µg/ml)** | **Bereich (µg/ml)** | **R²** |
| Codein | 90.6 ± 1.2 | 1.3 | 0.02 | 0.1 | 0.1-15.0 | 0.9997 |
| EDDP | 94.3 ± 1.8 | 1.9 | 0.02 | 0.1 | 0.1-15.0 | 0.9999 |
| MDA | 96.9 ± 0.7 | 0.8 | 0.02 | 0.1 | 0.1-5.0 | 0.9926 |
| Morphin | 83.2 ± 2.9 | 3.5 | 0.02 | 0.1 | 0.1-15.0 | 0.9947 |
| Scopolamin | 78.7 ± 4.9 | 6.2 | 0.02 | 0.2 | 0.2-15.0 | 0.9977 |
| IS | 72.7 ± 2.4 | 3.3 | 0.02 | 0.2 | 0.2-15.0 | 0.9949 |

**Tabelle 4: Beispiel einer Analysensequenz**

| **Vlal** | **Probennummer/-name** | **Injektionsvolumen (µl)** | **Methode** | **Detektionswellenlänge (nm)** | **Zeit (min)** | **Report** |
|---|---|---|---|---|---|---|
| - | Equilibrierung | - | Equilibrierungsmethode (Plasma-/Serum) | 210 | 30 | - |
| X | Plasma-/Serumprobe | 50 | Plasma-/Serum | 210 | 50 | Plasma-/Serumreport |
| X | Plasma-/Serumprobe | 50 | Plasma-/Serum | 210 | 50 | Plasma-/Serumreport |
| - | Equilibrierung | - | Equilibrierungsmethode (Urin) | 205/235 | 10 | - |
| X | Urinprobe | 1000 | Urinmethode | 205/235 | 40 | Urinreport |
| X | Urinprobe | 1000 | Urinmethode | 205/235 | 40 | Urinreport |
| - | Spülen | - | Spülmsthode (Urin) | 2051235 | 20 | - |
| - | Spülen | - | Spülmethode (Plasma-/Serum) | 210 | 20 | - |
| - | Standby | - | Standby-Methode | Detektor aus | | - |

## Patentansprüche

1. Verfahren zur Analyse von Substanzgemischen (Proben), umfassend folgende Schritte:
a) Vorreinigung des Substanzgemischs,
b) Inkontaktbringen des Substanzgemischs mit mindestens einem Teil eines chromatographischen Trennsystems, das eine stationäre Phase und eine mobile Phase (Eluens) umfasst,
c) Hindurchleiten eines Eluensstroms durch die stationäre Phase des chromatographischen Trennsystems,
d) Analyse des aus dem chromatographischen Trennsystem austretenden Eluensstroms mithilfe eines Detektors zur Detektion von Analyten,
e) Aufzeichnung des Detektorsignals in Abhängigkeit von der Zeit zur Generierung eines Probenspektrums,
f) Ermittlung von Retentionszeiten von Peaks im Probenspektrum,
g) Identifizierung von Analyten innerhalb des Substanzgemischs durch den Vergleich des Probenspektrums mit Vergleichsspektren.
**gekennzeichnet dadurch, dass** Schritt (a) durch Extraktion mit einer kationischen Fest-, Flüssig- oder nichtionischen Festphase erreicht wird,
ferner **dadurch gekennzeichnet, dass** die stationäre Phase in Schritt (b) mindestens einen hydrophoben (S, U) und einen kationischen (U) Teil umfasst.

2. Verfahren zur Analyse von Substanzgemischen (Proben) gemäß Anspruch 1, wobei das Substanzgemisch mit genau einem Teil des chromatographischen Trennsystems in Kontakt gebracht wird, dessen stationäre Phase genau einen hydrophoben (bevorzugt für Serumproben) einen kationischen (bevorzugt für Urinproben) Teil umfasst.

3. Verfahren nach Anspruch 1 - 2, wobei die Substanzgemische Körperflüssigkeiten, Standardlösungen oder Substanzproben sind.

4. Verfahren nach Anspruch 3, wobei die Körperflüssigkeiten Urinproben sind, wobei ferner die Vorreinigung in einer vollautomatischen on-line Extraktion besteht.

5. Verfahren nach Anspruch 3, wobei die Körperflüssigkeiten Serumproben sind, wobei ferner die Vorreinigung in einer flüssig-flüssig oder Festphasenextraktion besteht.

6. Verfahren nach Anspruch 3, wobei die Körperflüssigkeiten Proben von Speichel, Mageninhalt, Gallenflüssigkeit, Sputum oder Liquor sind.

7. Verfahren nach Anspruch 4, wobei die detektierten Analyte Alkaloide, Opiate, Opioide, Amphetaminderivate oder pharmazeutische Wirkstoffe sind.

8. Verfahren nach Anspruch 7, wobei die detektierten Analyte auch die Muttersubstanzen und/oder die Metabolite der Alkaloide, Opiate, Opioide, Amphetaminderivate oder pharmazeutischen Wirkstoffe mit pKa ≥ 6 umfassen.

9. Verfahren nach Anspruch 5, wobei die detektierten Analyte z.B. Antidepressiva, Antiepileptika, Barbiturate, Neuroleptika, Opiate, Opioide, Schlafmittel, Schmerzmittel, Tranquilizer, Benzodiazepine, Antidiabetika, Antimikrobielle Substanzen, Antiarrhytmika, Antihistaminika, Anticholinergika, Betablocker oder Sympathomimetika sind.

10. Verfahren nach Anspruch 9, wobei die detektierten Analyte auch die Muttersubstanzen und/oder die Metabolite der z.B. Antidepressiva, Antiepileptika, Barbiturate, Neuroleptika, Opiate, Opioide, Schlafmittel, Schmerzmittel, Tranquilizer, Benzodiazepine, Antidiabetika, Antimikrobielle Substanzen, Antiarrhytmika, Antihistaminika, Anticholinergika, Betablocker oder Sympathomimetika umfassen.

11. Verfahren nach Anspruch 1 -10, wobei der Eluensstrom eine veränderliche Zusammensetzung aufweist.

12. Verfahren nach Anspruch 1 -10 wobei der Eluensstrom eine isokratische Zusammensetzung aufweist. In Spezialfällen ist eine Gradientenelution anzuwenden.

13. Vorrichtungen zur Analyse von Substanzgemischen, umfassend die folgenden Teilkomponenten:
a) Probenaufnahmeteil,
b) Vorreinigungseinheit, wobei die Vorreinigungseinheit mindestens eine kationische Festphase zur Extraktion enthält,
c) chromatographisches Trennsystem, wobei das chromatographische Trennsystem eine stationäre Phase umfasst, die mindestens einen hydrophoben und einen kationischen Teilabschnitt umfasst,
d) Leitvorrichtung, die es ermöglicht einen Eluensstrom entweder entlang von Leitungsweg L1 (zuerst durch die kationische Festphasen-Vorreinigungseinheit und dann durch einen Teilabschnitt der stationären Phase des chromatographischen Trennsystems) oder entlang von Leitungsweg L2 (direkt durch einen Teilabschnitt der stationären Phase des chromatographischen Trennsystems) oder durch die nichtionische Festphasen-Vorreinigungseinheit zu führen.
e) Pumpeinheit zum Pumpen von Eluensströmen,
f) Detektoreinheit,

14. Verwendung eines Verfahrens gemäß Anspruch 1 - 12 und/oder einer Vorrichtung gemäß Anspruch 13 zur Bestimmung von Fremdstoffen in Körperflüssigkeiten.

15. Verwendung gemäß Anspruch 14 im Rahmen der Notfalldiagnostik, der klinischen Toxikologie oder im Rahmen forensischer Untersuchungen

16. In Spezialfällen ist eine Derivatisierung oder eine Hydrolyse von Substanzgemischen vor der Extraktion anzuwenden.
